# EUROPEAN PATENT APPLICATION

(11) **EP 4 195 356 A1**
(43) Date of publication of application: **14.06.2023**
(21) Application number: 20953645.7
(22) Date of filing: 17.09.2020
(51) Int. Cl.: H01M 10/48, H01M 10/05

(54) **THREE-ELECTRODE BATTERY AND ENERGY STORAGE SYSTEM**

(71) Applicant: Huawei Digital Power Technologies Co., Ltd., Shenzhen, Guangdong 518043 (CN)
(72) Inventor: ZHANG, Yezheng, Shenzhen, Guangdong 518129 (CN); XIA, Weihong, Shenzhen, Guangdong 518129 (CN); LE, Bin, Shenzhen, Guangdong 518129 (CN); ZHANG, Guanghui, Shenzhen, Guangdong 518129 (CN); ZHOU, Wei, Shenzhen, Guangdong 518129 (CN); QIN, Xue, Shenzhen, Guangdong 518129 (CN)
(74) Representative: Goddar, Heinz J.
(86) International application number: PCT/CN2020/115976
(87) International publication number: WO 2022/056787

(57) **Abstract**

A three-electrode battery (10) and an energy storage system are disclosed. The three-electrode battery (10) includes a battery management unit (14), a housing (11), and a reference electrode (13) and a battery cell (12) that are disposed in the housing (11). Adetection part (131) of the reference electrode (13) is located in the battery cell (12). A reference electrode tab (132) is located outside the battery cell (12). The battery management unit (14) is connected to the reference electrode tab (132) and a negative electrode tab (122) of the battery cell (12), so that a voltage between the reference electrode (13) and a negative electrode of the battery cell (12) can be collected in real time, to obtain a negative electrode potential of the battery cell (12), and a charging current of the battery (10) is controlled based on the negative electrode potential, so that the charging current can be optimized and adjusted in real time, to increase a charging speed. A charging speed of the three-electrode battery (10) is increased while lithium precipitation at the negative electrode is prevented, thereby implementing fast charging of the three-electrode battery (10).

## Description

### TECHNICAL FIELD

This application relates to the field of battery technologies, and in particular, to a three-electrode battery and an energy storage system.

### BACKGROUND

A lithium-ion battery is a secondary battery, and operates mainly depending on movement of lithium ions between a positive electrode and a negative electrode. During charging and discharging, the lithium ions are intercalated and deintercalated between the two electrodes. During charging, the lithium ions are deintercalated from the positive electrode, and are intercalated into the negative electrode through electrolyte, and the negative electrode is in a lithium-rich state. During discharging, a process is reverse. The lithium-ion battery has advantages such as high energy density, a high voltage platform, a small size, a long service life, no memory effect, a low self-discharge rate, and environmental friendliness, and therefore is widely used in the electronic terminal industry, the new energy industry, the energy storage industry, and the like.

The lithium-ion battery usually includes a housing and a battery cell. The battery cell is located in the housing. The housing is filled with electrolyte. The battery cell includes a positive electrode plate and a negative electrode plate. The positive electrode plate is connected to a positive electrode tab, and the negative electrode plate is connected to a negative electrode tab. A positive electrode pole and a negative electrode pole are disposed on an outer wall of the housing. The positive electrode pole is welded to the positive electrode tab, and the negative electrode pole is welded to the negative electrode tab, so that the lithium-ion battery is connected to a charging circuit or a discharging circuit through the positive electrode pole and the negative electrode pole.

However, during charging of the lithium-ion battery, when a negative electrode potential decreases to 0 V or less, lithium precipitation starts to occur on a surface of the negative electrode. Especially during charging at a large current, a negative electrode polarization potential is high, and lithium precipitation is more likely to occur, affecting safety and a service life of the battery, and limiting implementation of fast charging of the lithium-ion battery.

### SUMMARY

This application provides a three-electrode battery and an energy storage system, to resolve a problem that, in a conventional lithium-ion battery, lithium precipitation is likely to occur on a surface of a negative electrode, affecting safety and a service life of the battery, and limiting implementation of fast charging of the lithium-ion battery.

A first aspect of embodiments of this application provides a three-electrode battery, including a housing, a battery cell, a reference electrode, and a battery management unit. The battery cell and the reference electrode are disposed in the housing.

The battery cell is provided with a positive electrode tab and a negative electrode tab. The housing is provided with a positive electrode pole and a negative electrode pole. The positive electrode tab is connected to the positive electrode pole. The negative electrode tab is connected to the negative electrode pole.

The reference electrode includes a detection part and a reference electrode tab connected to the detection part. The detection part extends into the battery cell. The reference electrode tab is located outside the battery cell. Both the reference electrode tab and the negative electrode tab are connected to the battery management unit.

The battery management unit is configured to collect a voltage between the reference electrode and a negative electrode of the battery cell, to obtain a negative electrode potential of the battery cell, and control a charging current based on the negative electrode potential.

The reference electrode is added as a third electrode, and the reference electrode is located in the housing of the battery. The battery cell is further disposed in the housing of the battery. The detection part of the reference electrode is located in the battery cell. The reference electrode tab is located outside the battery cell. Both the reference electrode tab and the negative electrode tab of the battery cell are connected to the battery management unit. The battery management unit may collect the voltage between the reference electrode and the negative electrode of the battery cell. Because the reference electrode potential is known, the battery management unit may obtain the negative electrode potential of the battery cell based on voltage information, and detect the negative electrode potential in real time. The battery management unit may further control the charging current of the battery based on the obtained negative electrode potential, to optimize and adjust the charging current in real time, and increase a charging speed. This increases a charging speed of the battery while preventing lithium precipitation at the negative electrode of the battery, thereby implementing fast charging of the battery, and improving safety and a service life of the battery.

In addition, the negative electrode potential of the battery cell is obtained, so that external characteristic parameters of the battery can be enriched, thereby helping establish a more accurate battery model, improving accuracy of estimation and fault diagnosis of a battery charge state, a health state, a power state, and the like, and further improving use safety of the battery.

In a possible implementation, the positive electrode tab is connected to the battery management unit, and the battery management unit is configured to collect the voltage between the reference electrode and the negative electrode of the battery cell, and a voltage between the negative electrode and a positive electrode of the battery cell, to obtain a positive electrode potential of the battery cell. In this way, the battery management unit can obtain the positive electrode potential of the battery cell, and detect the positive electrode potential in real time, thereby further enriching external characteristic parameters of the battery, improving accuracy of the established battery model, and further improving safety of the battery.

In a possible implementation, the battery cell includes a positive electrode plate, a first separator, and a negative electrode plate. The positive electrode plate forms the positive electrode of the battery cell. The positive electrode tab is located on the positive electrode plate. The negative electrode plate forms the negative electrode of the battery cell. The negative electrode tab is disposed on the negative electrode plate. The first separator is located between the positive electrode plate and the negative electrode plate.

The detection part is embedded in the positive electrode plate, and a second separator is disposed between the detection part and the positive electrode plate. That is, the second separator is disposed at a contact location between the detection part and the reference electrode. The second separator can separate the reference electrode from the positive electrode plate without affecting circulation of ions. The detection part is embedded in the positive electrode plate, and the detection part does not protrude from the positive electrode plate. That is, the detection part of the reference electrode may be considered as a part of the positive electrode plate, and is located in the positive electrode plate. The detection part does not affect a size or a thickness of the positive electrode plate, does not affect an overall structure, a size, or a thickness of the battery cell, and therefore does not cause damage to a cross section of the battery, and does not cause adverse impact to electrochemical performance, such as a rate and cycling, of the battery cell.

In a possible implementation, the reference electrode tab is located at an end, of the detection part, that is close to the positive electrode tab.

The detection part is disposed at an edge location on a side, of the positive electrode plate, that is close to the positive electrode tab, or the detection part is disposed at a middle location on a side, of the positive electrode plate, that is close to the positive electrode tab. That is, the detection part is located on a side, of the positive electrode plate, that is close to the positive electrode tab, and specifically, is located at an edge of the side, or is located in the middle of the side. Alternatively, the detection part may be disposed at any location on the side, provided that it can be ensured that electrochemical performance of the positive electrode plate is not affected.

In a possible implementation, an extension length of the detection part is less than a length of the positive electrode plate in an extension direction of the detection part.

In a possible implementation, the reference electrode tab is located at an end, of the detection part, that is close to the positive electrode tab.

The detection part is located at an edge on a side, of the positive electrode plate, that is close to the positive electrode tab, and the detection part extends from one end of the positive electrode plate to the other end of the positive electrode plate. That is, the extension length of the detection part is the same as the length of the positive electrode plate in the extension direction. This facilitates cutting of the positive electrode plate for embedding the detection part, and an operation is simpler, thereby helping improve production efficiency and facilitating mass production.

In a possible implementation, the detection part includes a current collector and a coating layer applied onto the current collector. The current collector is connected to the reference electrode tab, and the second separator covers a peripheral side wall of the detection part. In this way, when the detection part is embedded in the positive electrode plate, the second separator is located between the positive electrode plate and the detection part.

In a possible implementation, a material of the coating layer is the same as a material of the positive electrode plate or the negative electrode plate. In this way, the reference electrode and an electrode plate of the battery can have a same service life, and a service life of the reference electrode is increased, thereby ensuring that positive and negative electrode potentials can be detected within a full life cycle of the battery cell of the battery, and implementing fast charging of the battery while avoiding lithium precipitation.

In a possible implementation, the battery is a lithium-ion battery, and the material of the coating layer is lithium titanate or lithium iron phosphate.

In a possible implementation, the positive electrode plate, the first separator, and the negative electrode plate are stacked to form the battery cell, that is, the battery cell may be a laminated battery cell.

In a possible implementation, the battery cell is a wound body formed by winding the positive electrode plate, the first separator, and the negative electrode plate as a whole, that is, the battery cell may be a wound battery cell.

In a possible implementation, the battery management unit includes a chip and a management module that are connected to each other, the chip is disposed in the housing, and the management module is located outside the housing.

Both the reference electrode and the negative electrode tab are connected to the chip. The chip is configured to collect the voltage between the reference electrode and the negative electrode of the battery cell, and send voltage information to the management module. The management module is configured to obtain the negative electrode potential of the battery cell based on the voltage information, and control the charging current based on the negative electrode potential. The positive electrode tab may also be connected to the chip. The chip may be configured to collect the voltage between the reference electrode and the positive electrode of the battery cell, and the voltage between the negative electrode and the positive electrode of the battery cell, and send voltage information to the management module. The management module obtains the positive electrode potential of the battery cell based on the voltage information.

In a possible implementation, the management module is configured to determine whether the negative electrode potential is greater than a preset threshold. When the negative electrode potential is greater than the preset threshold, the management module controls the charging current to increase. When the negative electrode potential is less than or equal to the preset threshold, the management module controls the charging current to decrease. This optimizes the charging current in real time, increases a charging speed, and implements fast charging of the battery, while further ensuring that lithium precipitation does not occur at the negative electrode.

In a possible implementation, when the negative electrode potential is greater than the preset threshold, the management module is further configured to control the charging current to increase based on a difference between the negative electrode potential and the preset threshold. For example, a larger difference between the negative electrode potential and the preset threshold (for example, the difference is greater than a preset difference) indicates that the charging current can be increased faster, to increase a charging speed. A smaller difference between the negative electrode potential and the preset threshold (for example, the difference is less than the preset difference) indicates that the charging current is to be increased more slowly, to avoid lithium precipitation, and avoid lithium precipitation caused by an excessively fast increase of the charging current.

In a possible implementation, a shape of the housing includes but is not limited to a cylindrical shape, a square shape, or an irregular shape; and
a molding material of the housing includes but is not limited to stainless steel, aluminum, or aluminum-plastic film.

A second aspect of embodiments of this application provides an energy storage system, including a battery control system and the three-electrode battery according to any one of the foregoing implementations. The battery control system is connected to a battery management unit of the three-electrode battery.

The energy storage system provided in this embodiment of this application includes the three-electrode battery. A reference electrode is added in the battery as a third electrode, and the reference electrode is located in a housing of the battery. Both a reference electrode tab and a negative electrode tab are connected to the battery management unit. The battery management unit collects a voltage between the reference electrode and a negative electrode of a battery cell in real time, to obtain a real-time negative electrode potential, and controls a charging current of the battery based on the negative electrode potential, to optimize and adjust the charging current in real time, and increase a charging speed. This increases a charging speed of the battery while preventing lithium precipitation at the negative electrode of the battery, thereby implementing fast charging of the battery, and improving use safety and emergency practicability of the energy storage system.

### BRIEF DESCRIPTION OF DRAWINGS

FIG. 1 is a schematic diagram of a structure of a three-electrode battery according to an embodiment of this application;
FIG. 2 is a schematic diagram of molding of a laminated battery cell according to an embodiment of this application;
FIG. 3 is a schematic diagram of molding of another laminated battery cell according to an embodiment of this application;
FIG. 4 is a schematic diagram of molding of still another laminated battery cell according to an embodiment of this application;
FIG. 5 is a schematic diagram of a structure of a reference electrode according to an embodiment of this application;
FIG. 6 is a schematic diagram of a structure of a wound battery cell before winding according to an embodiment of this application;
FIG. 7 is a schematic diagram of a structure of another wound battery cell before winding according to an embodiment of this application;
FIG. 8 is a schematic diagram of a structure of still another wound battery cell before winding according to an embodiment of this application; and
FIG. 9 is a schematic logical diagram of implementing fast charging of a three-electrode battery according to an embodiment of this application.

### Descriptions of reference numerals:

10: three-electrode battery; 11: shell; 111: positive electrode pole;
112: negative electrode pole; 12: battery cell; 121: positive electrode tab;
122: negative electrode tab; 123: positive electrode plate; 124: negative electrode plate;
125: first separator; 13: reference electrode; 131: detection part;
1311: coating layer; 132: reference electrode tab; 133: second separator; and
14: battery management unit; 141: chip; 142: management module.

### DESCRIPTION OF EMBODIMENTS

Terms used in embodiments of this application are only used to explain specific embodiments of this application, but are not intended to limit this application.

A lithium-ion battery is characterized by high specific energy, a long service life, no memory effect, a low self-discharge rate, environmental friendliness, and the like, and therefore is widely used in products such as energy storage base stations, electric vehicles, and consumer electronics.

The lithium-ion battery usually includes a housing and a battery cell disposed in the housing. The battery cell includes a positive electrode plate and a negative electrode plate. A separator is disposed between the positive electrode plate and the negative electrode plate, to separate the positive electrode plate from the negative electrode plate. In addition, the separator does not affect conduction of ions between a positive electrode and a negative electrode. The housing is provided with a positive electrode pole and a negative electrode pole. The positive electrode pole is welded to the positive electrode tab on the positive electrode plate. The negative electrode pole is welded to the negative electrode tab on the negative electrode plate. The lithium-ion battery is connected to an external charging circuit or discharging circuit through the positive electrode pole and the negative electrode pole.

During charging of the lithium-ion battery, for example, when a negative electrode potential decreases to 0 V or less, lithium precipitation starts to occur on a surface of the negative electrode. Especially during fast charging, because a large current is used, a negative electrode polarization potential is high, and lithium precipitation is more likely to occur, affecting safety and a service life of the battery. The lithium precipitation problem becomes one of important causes that limit implementation of fast charging of the lithium-ion battery.

In addition, application of the battery highly depends on a battery management policy for formulating proper charging and discharging guidelines. Estimation of a battery charge state, a health state, a power state, and the like can improve use safety of the battery, and also help a user learn of an operating status of the battery in a timely manner. Usually, a model is established based on external characteristic parameters of the battery, such as a terminal voltage U, a current I, a temperature T, and time t, to predict the battery charge state, the health state, and the power state of the battery, and predict a failure. However, due to limited parameters that can be used, the established model has low precision and a large error, and cannot meet an increasing battery management requirement.

Based on the foregoing problems, an embodiment of this application provides a three-electrode battery. A reference electrode is added as a third electrode, and the reference electrode is located in a housing of the battery. The battery further includes a battery cell and a battery management unit. The battery cell is disposed in the housing of the battery. A detection part of the reference electrode is located in the battery cell. A reference electrode tab is located outside the battery cell. Both the reference electrode tab and a negative electrode tab of the battery cell are connected to the battery management unit. The battery management may collect a voltage between the reference electrode and a negative electrode of the battery cell. Because a reference electrode potential is known, the battery management unit may obtain a negative electrode potential of the battery cell based on voltage information, and detect the negative electrode potential in real time. The battery management unit may further control a charging current of the battery based on the obtained negative electrode potential, to optimize and adjust the charging current in real time, and increase a charging speed. This increases a charging speed of the battery while preventing lithium precipitation at the negative electrode, thereby implementing fast charging of the battery. In addition, the negative electrode potential is obtained, so that external characteristic parameters of the battery can be enriched, thereby helping establish a more accurate battery model.

The three-electrode battery may be used in a communication base station, and serve as an energy storage device for the communication base station, to provide safe and stable standby power supply for the base station. Alternatively, the three-electrode battery may be used in an electronic terminal such as a mobile phone, a notebook computer, or a tablet computer, or may be used in a new energy vehicle. The battery may be a lithium-ion battery, a sodium-ion battery, or another battery in which metal precipitation may occur at a negative electrode. The following describes the three-electrode battery in detail by using an example in which the battery is a lithium-ion battery.

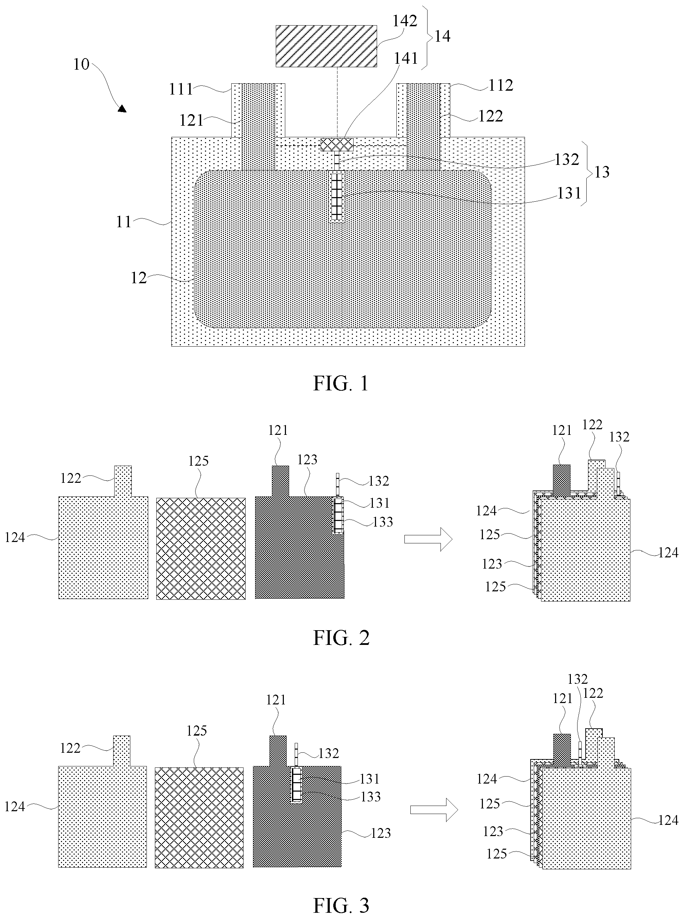

FIG. 1 is a schematic diagram of a structure of a three-electrode battery according to an embodiment of this application.

As shown in FIG. 1, an embodiment of this application provides a three-electrode battery 10, including a housing 11, a battery cell 12, a reference electrode 13, and a battery management unit 14. The housing 11 serves as a main supporting member of the battery 10. The housing 11 may have a sealed accommodation cavity. The battery cell 12 and the reference electrode 13 may be disposed in the accommodation cavity of the housing 11. The accommodation cavity of the housing 11 may be filled with electrolyte.

The battery cell 12 is an electrochemical battery cell including a positive electrode and a negative electrode. The battery cell 12 may be a bare battery cell. The battery cell 12 has a positive electrode tab 121 and a negative electrode tab 122 that are respectively connected to the positive electrode and the negative electrode of the battery cell 12. The housing 11 is provided with a positive electrode pole 111 and a negative electrode pole 112. The positive electrode tab 121 is connected to the positive electrode pole 111, and the negative electrode tab 122 is connected to the negative electrode pole 112, so that the battery 10 is connected to an external charging or discharging circuit through the positive electrode pole 111 and the negative electrode pole 112, to implement discharging and charging functions of the battery 10.

The reference electrode 13 is an electrode used for reference and comparison and has a known stable potential. Specifically, the reference electrode 13 includes a detection part 131 and a reference electrode tab 132. An electrode reaction mainly occurs on the detection part 131 of the reference electrode 13. The reference electrode tab 132 is located at one end of the detection part 131 and is connected to the detection part 131. The detection part 131 extends into the battery cell 12. The reference electrode tab 132 is located outside the battery cell 12. Both the reference electrode tab 132 and the negative electrode tab 122 are connected to the battery management unit 14. The battery management unit 14 may collect a voltage between the reference electrode 13 and the negative electrode of the battery cell 12 through the reference electrode tab 132 and the negative electrode tab 122.

Because the reference electrode 13 is an electrode used for reference and comparison and has a known stable potential, the battery management unit 14 may obtain a negative electrode potential of the battery cell 12 based on information about the voltage between the reference electrode 13 and the negative electrode of the battery cell 12 and the known potential of the reference electrode 13, to detect the negative electrode potential in real time, thereby avoiding lithium precipitation that occurs when the negative electrode potential reaches a potential at which lithium precipitation may occur.

The battery management unit 14 may further control a charging current of the battery 10 based on the obtained negative electrode potential, to adjust the charging current in real time, so as to increase a charging speed. Specifically, if the negative electrode potential is far higher than the potential at which lithium precipitation occurs, the charging current may be properly increased. If the negative electrode potential is close to the potential at which lithium precipitation occurs, the charging current may be decreased. The charging current is optimized and adjusted in real time, to increase a charging speed. This can increase a charging speed of the battery 10 while preventing lithium precipitation at the negative electrode of the battery 10, thereby implementing fast charging of the three-electrode battery 10, and improving safety and a service life of the three-electrode battery 10.

In addition, the battery management unit 14 may obtain the negative electrode potential of the battery cell 12 based on the collected voltage between the reference electrode 13 and the negative electrode of the battery cell 12, so that external characteristic parameters of the three-electrode battery 10 can be enriched. This helps establish a more accurate battery model, fundamentally improves precision of the battery model, and improves accuracy of estimation and fault diagnosis of a battery charge state, a health state, a power state, and the like of the three-electrode battery 10, thereby improving use safety of the battery 10.

The positive electrode tab 121 may also be connected to the battery management unit 14. The battery management unit 14 may be configured to collect a voltage between the reference electrode 13 and the positive electrode of the battery cell 12, and a voltage between the positive electrode and the negative electrode of the battery cell 12, and obtain a positive electrode potential of the battery cell 12 based on voltage information, to detect the positive electrode potential in real time. This further enriches external characteristic parameters of the three-electrode battery 10, and improves accuracy of the established three-electrode battery model, thereby improving safety of the three-electrode battery 10.

Specifically, the battery management unit 14 may include a chip 141 and a management module 142. The chip 141 is disposed in the housing 11, and the management module 142 is located outside the housing 11. The chip 141 may be connected to the management module 142 through wireless communication. The reference electrode 13, the negative electrode tab 122, and the positive electrode tab 121 may all be connected to the chip 141. The chip 141 is configured to collect the voltage between the reference electrode 13 and the negative electrode of the battery cell 12, the voltage between the reference electrode 13 and the positive electrode of the battery cell 12, and the voltage between the negative electrode of the battery cell 12 and the positive electrode of the battery cell 12, and send voltage information to the management module 142. The management module 142 may obtain the negative electrode potential of the battery cell 12 and the positive electrode potential of the battery cell 12 based on the voltage information, and control the charging current of the battery based on the negative electrode potential.

In this embodiment of this application, the reference electrode 13 is packaged in the housing 11 of the three-electrode battery 10. Compared with the conventional technology in which one end of a reference electrode extends out of a housing and the other end extends into the housing, this can effectively improve sealing performance of the housing 11, avoid electrolyte leakage caused by the disposing of the reference electrode 13, improve use safety of the three-electrode battery 10, and also facilitate production of the housing 11.

In addition, it should be noted that, before the reference electrode 13 is used, the reference electrode 13 needs to be connected to the battery cell 12, to charge the reference electrode 13, so that a potential of the reference electrode 13 is stable.

FIG. 2 is a schematic diagram of molding of a laminated battery cell according to an embodiment of this application.

As shown in FIG. 2, the battery cell 12 may include a positive electrode plate 123, a first separator 125, and a negative electrode plate 124. The positive electrode plate 123 forms a positive electrode of the battery cell 12. A positive electrode tab 121 is disposed on the positive electrode plate 123. The negative electrode plate 124 forms a negative electrode of the battery cell 12.

A negative electrode tab 122 is disposed on the negative electrode plate 124. The first separator 125 is disposed between the positive electrode plate 123 and the negative electrode plate 124, and the first separator 125 separates the positive electrode plate 123 from the negative electrode plate 124, to avoid a short circuit caused by contact between the positive electrode plate 123 and the negative electrode plate 124. In addition, the first separator 125 can implement conduction of ions, without affecting circulation of lithium ions between the positive electrode and the negative electrode.

In a battery with a reference electrode in the conventional technology, one end of the reference electrode extends out of a housing, one end is inserted into the housing, and the reference electrode is disposed between a positive electrode plate and a negative electrode plate in parallel. Specifically, a separator is disposed between the reference electrode and the positive electrode plate, and a separator is also disposed between the reference electrode and the negative electrode plate. In this case, the disposing of the reference electrode increases a thickness of a battery cell, causing damage to positive and negative electrode interface layers of the battery cell, and affecting electrochemical performance, such as a rate and cycling, of the battery cell.

In this embodiment of this application, a detection part 131 of a reference electrode 13 is embedded in the positive electrode plate 123, and a second separator 133 is disposed between the detection part 131 and the positive electrode plate 123. That is, the second separator 133 is disposed at a contact location between the detection part 131 and the reference electrode 13. The second separator 133 can separate the reference electrode 13 from the positive electrode plate 123, without affecting circulation of ions.

The detection part 131 is embedded in the positive electrode plate 123, and the detection part 131 does not protrude from the positive electrode plate 123. That is, the detection part 131 of the reference electrode 13 may be considered as a part of the positive electrode plate 123, and is located in the positive electrode plate 123. The detection part 131 does not affect a size or a thickness of the positive electrode plate 123, does not affect an overall structure, a size, or a thickness of the battery cell 12, and therefore does not cause damage to an interface of the battery cell 12, and does not cause adverse impact to electrochemical performance, such as a rate and cycling, of the battery cell 12.

As shown in FIG. 2, the first separator 125 is disposed between the positive electrode plate 123 and the negative electrode plate 124, the reference electrode 13 and the positive electrode plate 123 are located on one side of the first separator 125 and are disposed in close contact with the first separator 125, and the first separator 125 is disposed in close contact with the negative electrode plate 124. In this way, the detection part 131 of the reference electrode 13 is in close contact with the positive electrode plate 123 and the negative electrode plate 124, and can accurately measure the positive electrode potential and the negative electrode potential, thereby improving accuracy of detecting the positive electrode potential and the negative electrode potential.

The detection part 131 of the reference electrode 13 is embedded in the positive electrode plate 123. Specifically, a part that matches a size, a shape, and the like of the detection part 131 may be cut from the positive electrode plate 123 through cutting, and then the detection part 131 is disposed at a location corresponding to the removed part on the positive electrode plate 123, so that the detection part 131 of the reference electrode 13 is embedded in the positive electrode plate 123.

The reference electrode tab 132 may be located at an end, of the detection part 131, that is close to the positive electrode tab 121, that is, the reference electrode tab 132 and the positive electrode tab 121 may be located on one side surface of the positive electrode plate 123, to facilitate connections between the reference electrode tab 132 and the positive electrode tab 121 and the chip 141, and optimize a local layout of the battery cell 12, thereby helping reduce a size of the battery 10.

As shown in FIG. 2, a laminated battery cell is used as an example. The detection part 131 may be disposed at an edge location on a side, of the positive electrode plate 123, that is close to the positive electrode tab 121. That is, the detection part 131 is located on a side, of the positive electrode plate 123, that is close to the positive electrode tab 121, and specifically, is located at an edge of the side.

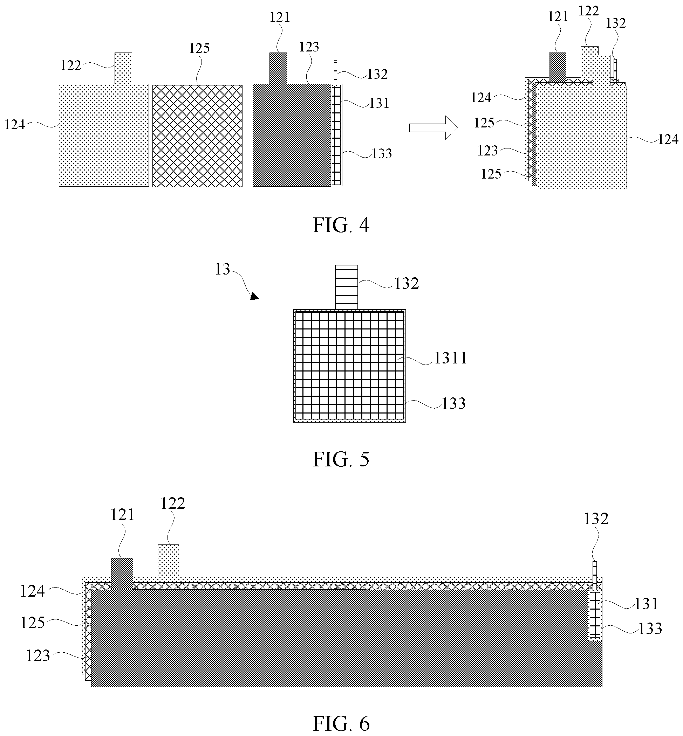

FIG. 3 is a schematic diagram of molding of another laminated battery cell according to an embodiment of this application. FIG. 4 is a schematic diagram of molding of still another laminated battery cell according to an embodiment of this application.

Alternatively, as shown in FIG. 3, the detection part 131 may alternatively be disposed at a middle location on a side, of the positive electrode plate 123, that is close to the positive electrode tab 121. That is, the detection part 131 is located on a side, of the positive electrode plate 123, that is close to the positive electrode tab 121, and is located in the middle of the side. Alternatively, the detection part 131 may be disposed at any location on the side, provided that it can be ensured that electrochemical performance of the positive electrode plate 123 is not affected.

As shown in FIG. 2 and FIG. 3, an extension length of the detection part 131 may be less than a length of the positive electrode plate 123 in an extension direction (an extension direction of the detection part 131).

Alternatively, as shown in FIG. 4, when the detection part 131 is located at the edge of the side, of the positive electrode plate 123, that is close to the positive electrode tab 121, the detection part 131 may extend from one end of the positive electrode plate 123 to the other end of the positive electrode plate 123. That is, the extension length of the detection part 131 is the same as the length of the positive electrode plate 123 in the extension direction. This facilitates cutting of the positive electrode plate 123 for embedding the detection part 131, and an operation is simpler, thereby helping improve production efficiency and facilitating mass production.

FIG. 5 is a schematic diagram of a structure of a reference electrode according to an embodiment of this application.

In this embodiment of this application, as shown in FIG. 5, the reference electrode 13 includes a current collector (not shown in the figure) and a coating layer 1311 applied onto the current collector. The current collector is a structure for collecting a current, for example, a metal foil, and specifically, may be a copper foil, an aluminum foil, or the like.

The reference electrode tab 132 is connected to the current collector, and the second separator 133 covers a peripheral side wall of the detection part 131. In this way, when the detection part 131 is embedded into the positive electrode plate 123, the second separator 133 is located between the positive electrode plate 123 and the detection part 131.

A material of the coating layer 1311 may be the same as a material of the positive electrode plate 123 or the negative electrode plate 124. In this way, the reference electrode 13 and an electrode plate of the battery can have a same service life, and a service life of the reference electrode 13 is increased, thereby ensuring that positive and negative electrode potentials can be detected within a full life cycle of the battery cell 12 of the battery, and implementing fast charging of the three-electrode battery 10 while avoiding lithium precipitation.

Specifically, it may be understood that the material of the coating layer should have a stable potential value. For example, in this embodiment of this application, the battery 10 is a lithium-ion battery, the material of the positive electrode plate 123 may be lithium iron phosphate, lithium manganese phosphate, lithium nickel acid, nickel cobalt manganese, nickel cobalt aluminum, or the like, the material of the negative electrode plate 124 may be graphite, lithium titanate, or the like, and the material of the coating layer 1311 on the detection part 131 of the reference electrode 13 may be one of lithium titanate and lithium iron phosphate.

In this embodiment of this application, as shown in FIG. 2 to FIG. 4, the battery cell 12 may be a laminated battery cell. Specifically, the positive electrode plate 123, the first separator 125, and the negative electrode plate 124 are stacked to form the battery cell 12. There may be one or more positive electrode plates 123 and negative electrode plates 124. A plurality of positive electrode plates 123 and negative electrode plates 124 are disposed alternately, that is, one positive electrode plate 123 is adjacent to one negative electrode plate 124. A first separator 125 is disposed between a positive electrode plate 123 and a negative electrode plate 124 that are adjacent. The reference electrode 13 may be embedded in one of the positive electrode plates 123, or reference electrodes 13 may be embedded in several positive electrode plates.

During preparation of the three-electrode battery 10, first, a part that matches a size, a shape, and the like of the detection part 131 of the reference electrode 13 may be removed from the positive electrode plate 123 through cutting, and the detection part 131 is embedded at a location corresponding to the removed part on the positive electrode plate 123. Then the negative electrode plate 124, the first separator 125, and the positive electrode plate 123 in which the reference electrode 13 is embedded are stacked, where the first separator 125 is located between a positive electrode plate and a negative electrode plate, to form the battery cell 12. The battery cell 12 and the chip 141 are packaged in the housing 11 of the battery 10. The three-electrode battery 10 is obtained after baking, liquid injection, standing, formation, aging, sealing, and capacity testing.

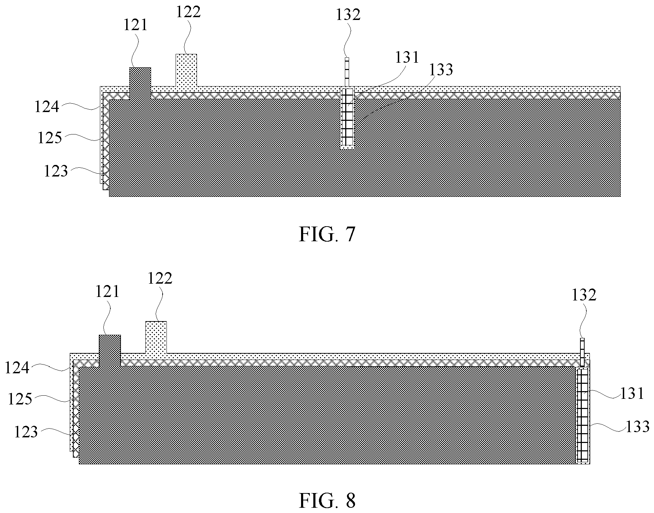

FIG. 6 is a schematic diagram of a structure of a wound battery cell before winding according to an embodiment of this application. FIG. 7 is a schematic diagram of a structure of another wound battery cell before winding according to an embodiment of this application. FIG. 8 is a schematic diagram of a structure of still another wound battery cell before winding according to an embodiment of this application.

Alternatively, the battery cell 12 may be a wound battery cell. As shown in FIG. 6, specifically, the positive electrode plate 123, the first separator 125, and the negative electrode plate 124 are stacked, that is, a first separator 125 is disposed between a positive electrode plate 123 and a negative electrode plate 124 that are adjacent. The reference electrode 13 may be embedded in one of the positive electrode plates 123. Then the positive electrode plate 123, the first separator 125, and the negative electrode plate 124 are wound as a whole to form the battery cell 12.

It may be understood that, in the wound battery cell 12, as shown in FIG. 6, the detection part 131 may be disposed at an edge location of a side, of the positive electrode plate 123, that is close to the positive electrode tab 121; or as shown in FIG. 7, the detection part 131 may be disposed at a middle location of a side, of the positive electrode plate 123, that is close to the positive electrode tab 121; or the detection part 131 may be disposed at any location on the side.

As shown in FIG. 6 and FIG. 7, an extension length of the detection part 131 may be less than a length of the positive electrode plate 123 in an extension direction. Alternatively, as shown in FIG. 8, when the detection part 131 is disposed at the edge location of the side, of the positive electrode plate 123, that is close to the positive electrode tab 121, the detection part 131 may extend from one end of the positive electrode plate 123 to the other end of the positive electrode plate 123. That is, the extension length of the detection part 131 is the same as the length of the positive electrode plate 123 in the extension direction.

Correspondingly, during preparation of the three-electrode battery 10, first, a part that matches a size, a shape, and the like of the detection part 131 of the reference electrode 13 may be removed from the positive electrode plate 123 through cutting, and the detection part 131 is embedded at a location corresponding to the part. Then the negative electrode plate 124, the first separator 125, and the positive electrode plate 123 in which the reference electrode 13 is embedded are stacked and then wound as a whole to form an approximately cylindrical battery cell 12. The battery cell 12 and the chip 141 are packaged in the housing 11 of the battery 10. The three-electrode battery 10 is obtained after baking, liquid injection, standing, formation, aging, sealing, and capacity testing.

In this embodiment of this application, the management module 142 is configured to obtain the positive electrode potential and the negative electrode potential based on the voltage information sent by the chip 141, and control the charging current of the battery 10 based on the negative electrode potential, to optimize and adjust the charging current. In addition, after adjusting the charging current, the management module 142 further determines whether charging of the battery 10 meets a cutoff condition. If the cutoff condition is met, it indicates that the battery 10 is fully charged, and the charging stops. If the cutoff condition is not met, the management module 142 continues to adjust the charging current based on a real-time negative electrode potential, until the charging cutoff condition is met.

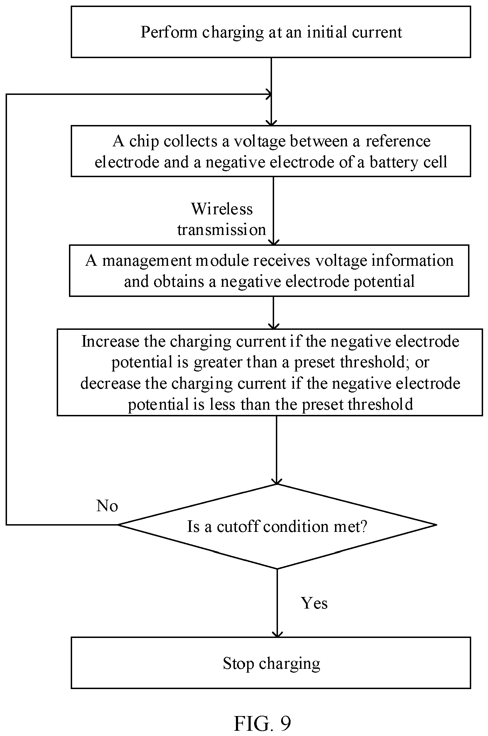

FIG. 9 is a schematic logical diagram of implementing fast charging of a three-electrode battery according to an embodiment of this application.

Specifically, as shown in FIG. 9, first, the battery 10 is charged at an initial current. The chip 141 collects information about a voltage between the negative electrode and the reference electrode 13, and wirelessly sends the voltage information to the management module 142. After receiving the voltage information, the management module 142 obtains the negative electrode potential, and determines whether the negative electrode potential is greater than a preset threshold. If the negative electrode potential is greater than the preset threshold, for example, 10 mV, it indicates that the negative electrode potential is higher than a negative electrode potential at which lithium precipitation occurs, and the charging current may be controlled to increase.

If the negative electrode potential is less than or equal to the preset threshold, it indicates that the negative electrode potential is close to the negative electrode potential at which lithium precipitation occurs, and the charging current is controlled to decrease. This can optimize the charging current in real time, increase a charging speed, and implement fast charging of the three-electrode battery 10, while further ensuring that lithium precipitation does not occur at the negative electrode.

When the negative electrode potential is greater than the preset threshold, the management module 142 may further control the charging current to increase based on a difference between the negative electrode potential and the preset threshold. Specifically, a larger difference between the negative electrode potential and the preset threshold (for example, the difference is greater than a preset difference) indicates that the charging current can be increased faster, to increase a charging speed.

A smaller difference between the negative electrode potential and the preset threshold (for example, the less than the preset difference) indicates that the charging current is to be increased more slowly, to avoid lithium precipitation caused by an excessively fast increase of the charging current, and further ensure that lithium precipitation does not occur at the negative electrode.

In this embodiment of this application, a shape of the housing 11 of the battery 10 includes but is not limited to a cylindrical shape, a square shape, or an irregular shape, and a molding material of the housing 11 includes but is not limited to stainless steel, aluminum, or an aluminum-plastic film.

An embodiment of this application further provides an energy storage system, including a battery control system and the three-electrode battery 10 in any one of the foregoing embodiments. The battery control system may be connected to the battery management unit 14 of the three-electrode battery 10, and specifically, is connected to the management module 142. The management module 142 may be disposed in the battery control system, and the management module 142 may control a charging current of the battery 10 by using the battery control system.

The energy storage system provided in this embodiment of this application includes the three-electrode battery. A reference electrode is added in the battery as a third electrode, and the reference electrode is located in a housing of the battery. The battery management unit collects a voltage between the reference electrode and a negative electrode of a battery cell in real time, to obtain a real-time negative electrode potential, and controls a charging current of the battery based on the negative electrode potential, to optimize and adjust the charging current in real time, and increase a charging speed. This increases a charging speed of the battery while preventing lithium precipitation at the negative electrode of the battery, thereby implementing fast charging of the battery, and improving use safety and emergency practicability of the energy storage system.

In descriptions of embodiments of this application, it should be noted that, unless otherwise clearly specified and limited, the terms "mounting", "connected to", and "connection" should be understood in a broad sense. For example, the connection may be a fixed connection, may be an indirect connection by using an intermediate medium, or may be an internal connection between two elements or an interaction relationship between two elements. For a person of ordinary skill in the art, specific meanings of the foregoing terms in embodiments of this application may be understood based on a specific situation.

In the specification, claims, and accompanying drawings of embodiments of this application, the terms "first", "second", "third", "fourth", and so on (if existent) are intended to distinguish between similar objects but do not necessarily indicate a specific order or sequence.

Finally, it should be noted that the foregoing embodiments are merely intended for describing technical solutions in embodiments of this application rather than limiting embodiments of this application. Although embodiments of this application are described in detail with reference to the foregoing embodiments, persons of ordinary skill in the art should understand that they may still make modifications to technical solutions described in the foregoing embodiments or make equivalent replacements to some or all technical features thereof, without departing from the scope of technical solutions in embodiments of this application

## Claims

1. A three-electrode battery, comprising a housing, a battery cell, a reference electrode, and a battery management unit, wherein the battery cell and the reference electrode are disposed in the housing;
the battery cell is provided with a positive electrode tab and a negative electrode tab, the housing is provided with a positive electrode pole and a negative electrode pole, the positive electrode tab is connected to the positive electrode pole, and the negative electrode tab is connected to the negative electrode pole;
the reference electrode comprises a detection part and a reference electrode tab connected to the detection part, the detection part extends into the battery cell, the reference electrode tab is located outside the battery cell, and both the reference electrode tab and the negative electrode tab are connected to the battery management unit; and
the battery management unit is configured to collect a voltage between the reference electrode and a negative electrode of the battery cell, to obtain a negative electrode potential of the battery cell, and control a charging current based on the negative electrode potential.

2. The three-electrode battery according to claim 1, wherein the positive electrode tab is connected to the battery management unit, and the battery management unit is further configured to collect the voltage between the reference electrode and the negative electrode of the battery cell, and a voltage between the negative electrode of the battery cell and a positive electrode of the battery cell, to obtain a positive electrode potential of the battery cell.

3. The three-electrode battery according to claim 2, wherein the battery cell comprises a positive electrode plate, a first separator, and a negative electrode plate, the positive electrode plate forms the positive electrode of the battery cell, the positive electrode tab is located on the positive electrode plate, the negative electrode plate forms the negative electrode of the battery cell, the negative electrode tab is disposed on the negative electrode plate, and the first separator is located between the positive electrode plate and the negative electrode plate; and
the detection part is embedded in the positive electrode plate, and a second separator is disposed between the detection part and the positive electrode plate.

4. The three-electrode battery according to claim 3, wherein the reference electrode tab is located at an end, of the detection part, that is close to the positive electrode tab; and
the detection part is disposed at an edge location on a side, of the positive electrode plate, that is close to the positive electrode tab, or the detection part is disposed at a middle location on a side, of the positive electrode plate, that is close to the positive electrode tab.

5. The three-electrode battery according to claim 4, wherein an extension length of the detection part is less than a length of the positive electrode plate in an extension direction of the detection part.

6. The three-electrode battery according to claim 3, wherein the reference electrode tab is located at an end, of the detection part, that is close to the positive electrode tab; and
the detection part is located at an edge on a side, of the positive electrode plate, that is close to the positive electrode tab, and the detection part extends from one end of the positive electrode plate to the other end of the positive electrode plate.

7. The three-electrode battery according to any one of claims 3 to 6, wherein the detection part comprises a current collector and a coating layer applied onto the current collector, the current collector is connected to the reference electrode tab, and the second separator covers a peripheral side wall of the detection part.

8. The three-electrode battery according to claim 7, wherein a material of the coating layer is the same as a material of the positive electrode plate or the negative electrode plate.

9. The three-electrode battery according to claim 8, wherein the battery is a lithium-ion battery, and the material of the coating layer is lithium titanate or lithium iron phosphate.

10. The three-electrode battery according to any one of claims 3 to 9, wherein the positive electrode plate, the first separator, and the negative electrode plate are stacked to form the battery cell.

11. The three-electrode battery according to any one of claims 3 to 9, wherein the battery cell is a wound body formed by winding the positive electrode plate, the first separator, and the negative electrode plate as a whole.

12. The three-electrode battery according to any one of claims 1 to 11, wherein the battery management unit comprises a chip and a management module that are connected to each other, the chip is disposed in the housing, and the management module is located outside the housing; and
both the reference electrode and the negative electrode tab are connected to the chip, the chip is configured to collect the voltage between the reference electrode and the negative electrode of the battery cell, and send voltage information to the management module, and the management module is configured to obtain the negative electrode potential of the battery cell based on the voltage information, and control the charging current based on the negative electrode potential.

13. The three-electrode battery according to claim 12, wherein the management module is configured to determine whether the negative electrode potential is greater than a preset threshold, and when the negative electrode potential is greater than the preset threshold, the management module controls the charging current to increase, or when the negative electrode potential is less than or equal to the preset threshold, the management module controls the charging current to decrease.

14. The three-electrode battery according to claim 13, wherein when the negative electrode potential is greater than the preset threshold, the management module is further configured to control the charging current to increase based on a difference between the negative electrode potential and the preset threshold.

15. The three-electrode battery according to any one of claims 1 to 14, wherein a shape of the housing comprises a cylindrical shape, a square shape, or an irregular shape; and
a molding material of the housing comprises stainless steel, aluminum, or aluminum-plastic film.

16. An energy storage system, comprising a battery control system and the three-electrode battery according to any one of claims 1 to 15, wherein the battery control system is connected to a battery management unit of the three-electrode battery.
